(19) Europäisches Patentamt
European Patent Office
Office européen des brevets

(11) Publication number: **0 205 096 B1**

(12) **EUROPEAN PATENT SPECIFICATION**

(45) Date of publication of patent specification: **26.01.94**

(51) Int. Cl.$^5$: **C08G 77/42**, C08F 2/38

(21) Application number: **86107624.8**

(22) Date of filing: **04.06.86**

(54) **Process for producing silicon containing polymers having comb-shape structure.**

(30) Priority: **11.06.85 JP 126724/85**

(43) Date of publication of application:
**17.12.86 Bulletin 86/51**

(45) Publication of the grant of the patent:
**26.01.94 Bulletin 94/04**

(84) Designated Contracting States:
**CH DE FR GB LI**

(56) References cited:

| | |
|---|---|
| **DE-B- 1 795 389** | **FR-A- 2 105 984** |
| **FR-A- 2 360 617** | **GB-A- 620 693** |
| **GB-A- 1 199 776** | **US-A- 4 146 697** |

(73) Proprietor: **SUNSTAR GIKEN KABUSHIKI KAISHA**
**7-1 Aketa-cho**
**Takatsuki-shi Osaka-fu(JP)**

(72) Inventor: **Kuriyama, Akira**
**2-10, Kizuri 3-chome**
**Higashiosaka-shi Osaka-fu(JP)**
Inventor: **Kadowaki, Toshio**
**4-23-7, Mukonoso**
**Amagasaki-shi Hyogo-ken(JP)**
Inventor: **Deguchi, Osami**
**4-36-15, Tsukaguchi-cho**
**Amagasaki-shi Hyogo-ken(JP)**

(74) Representative: **Kraus, Walter, Dr. et al**
**Patentanwälte Kraus, Weisert & Partner**
**Thomas-Wimmer-Ring 15**
**D-80539 München (DE)**

**EP 0 205 096 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for producing a novel silicon-containing polymer having comb-shaped structure and an intermediate thereof. More particularly, it relates to a process for producing a silicon-containing polymer having comb-shaped structure comprising a unit of an organopolysiloxane as the main chain and a vinyl polymer as the side chain of the following formula:

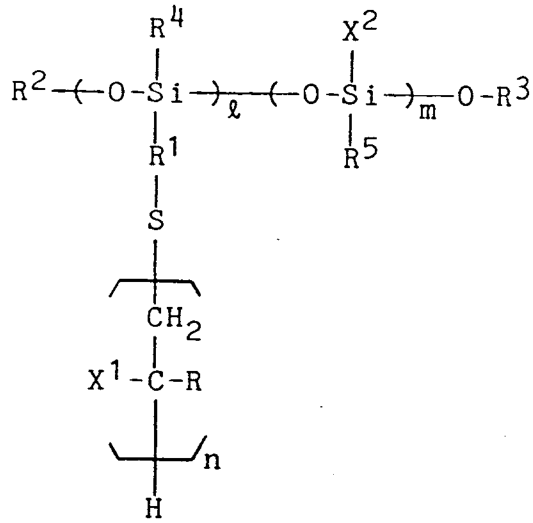

(I)

wherein $R^1$ is an alkylene having 1 to 4 carbon atoms, $R^2$, $R^3$ and $R^4$ are the same or different and are each an alkyl having 1 to 4 carbon atoms, R is hydrogen atom or methyl, $X^1$ is hydroxycarbonyl, an alkoxycarbonyl having 2 to 5 carbon atoms, a cycloalkyloxycarbonyl having 3 to 8 carbon atoms in the cycloalkyl moiety or phenyl, n is an integer of 1 to 100,000, $R^5$ is an alkyl having 1 to 4 carbon atoms or phenyl, $X^2$ is hydrogen atom, an alkyl having 1 to 4 carbon atoms, phenyl, chlorine, an alkoxysilyl having 1 to 4 carbon atoms in the alkoxy moiety, or an alkyl having 1 to 4 carbon atoms and containing a group selected from $-NH_2$, -NH-, -SH and -CN, $\ell$ has a minimum average value of 4.6 and a maximum value of 20, and m is 0 or an integer of from 1 to 10, which has migration property and can give water-repellency and adhesion when applied to, and an intermediate for producing the comb-shaped polymer, i.e. an alkoxysilyl group-containing polycondensable macromonomer of the following formula

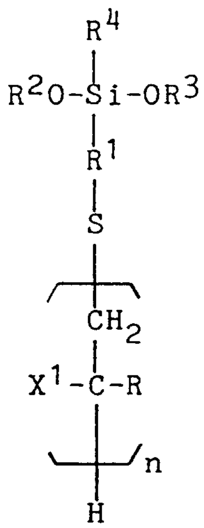

(II)

wherein R, $R^1$, $R^2$, $R^3$, $R^4$, $X^1$ and n are as defined above, and a process for the production thereof.

Recently, there have been produced various types of polymers having various functions. Among these, there are known some polymers having migration property, such as block polymers, graft polymers and

comb-shaped polymers. For example, there are disclosed silicone graft polymers produced by polycondensing a silicone compound of the formula:

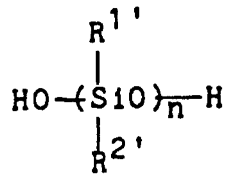 (A)

wherein $R^{1'}$ and $R^{2'}$ are monovalent aliphatic hydrocarbon having 1 to 10 carbon atoms, phenyl or a monovalent halogenated hydrocabon, and n is an integer of 1 or more, with an acrylic compound of the formula:

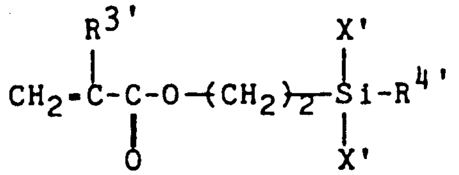 (B)

wherein $R^{3'}$ is hydrogen atom or methyl, $R^{4'}$ is methyl, ethyl, or phenyl, and X' is chlorine atom, methoxy or ethoxy, and graft-copolymerzing the resulting acrylic modified silicone with a radical copolymerizable monomer, which are useful for the preparation of a coating composition which can give a coating film having excellent water-repellency, stain resistance, and low friction (cf. JP-A-154766/1983 and 167606/1983). There are also known vinyl polymerizable straight chain silicone oligomer of the formula:

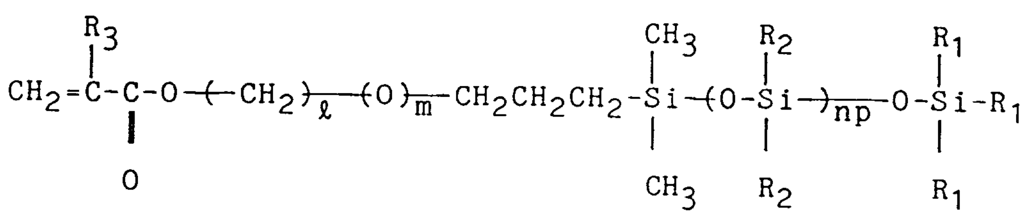

wherein $R_1$ is an alkyl having 1 to 4 carbon atoms, $R_2$ is methyl, ethyl or phenyl, $R_3$ is hydrogen atom or methyl, m is 0 or 1, $\ell$ is an integer of 0 - 2 in case of m = 0, or $\ell$ is 2 in case of m = 1, n is a positive integer, and p is 3 or 4, which is useful as a surface treating agent for materials such as glass and can give water-repellency, stain resistance, non-adhesion, heat resistance, and friction resistance (cf. JP-A-78236/1984). These polymers are, however, hardly obtainable in view of low yield, complicated multiple reaction steps, and/or high cost.

FR-A-2 105 984 discloses a non-aqueous emulsion comprising a suspension of (a) organic vinyl polymer particles and (b) a siloxane block or graft copolymer having a molecular weight of the siloxane moiety of 500 in (c) an organic liquid medium having specific solubility to the components (a) and (b), which is useful as a coating agent.

FR-A-2 360 617 discloses a thermoplastic vinyl polymer composition comprising a dispersion of a rubber particle of vinyl polymer grafted polysiloxane, which is prepared by bulk polymerization or suspension polymerization of a thermoplastic vinyl polymer of acrylic copolymer and a polysiloxane in an acrylic monomer in the presence of a polymerization initiator.

DE-A 17 95 389 discloses a process for producing a siloxane emulsion containing a compound of the formula:

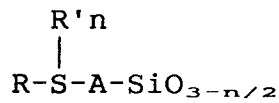

(R is a hydrocarbon radical derived from a non-polymerizable olefin) in emulsion state, which comprises subjecting a non-polymerizable olefin to addition reaction to a silicon compound of the formula:

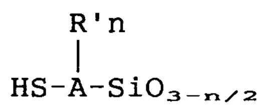

in the presence of a radical-occurring agent. This product of said document is useful as an improver of weatherability in paints, a molding material with styrene, and as a cloth treating agent.

GB-A 0 620 693 discloses a copolymer of methyl vinyl polysiloxane and methyl methacrylate, which is produced by polymerization of a mixture of methyl vinyl polysiloxane: $[(CH_3)(CH_2=CH)SiO]_n$ and methyl methacrylate.

The present inventors have intensively studied to obtain a process for producing a novel polymer having excellent migration property easily and with low cost, and have found that a novel silicon-containing polymer having a comb-shaped structure which comprises an organopolysiloxane as the main chain and a vinyl polymer as the side chain and having desirable excellent properties can be produced by polymerizing a vinyl monomer by using a mercaptosilane compound containing a dialkoxysilyl group as a chain transfer agent to obtain a polycondensable macromonomer containing a dialkoxysilyl group at the terminus and polycondensing the resulting macromonomer alone or together with a specific dialkoxysilane compound.

An object of the invention is to provide a process for producing a novel silicon-containing comb-shaped polymer having migration property and being capable of giving water-repellency and adhesion when applied to. Another object of the invention is to provide an intermediate alkoxysilyl group-containing polycondensable macromonomer suitable for production of said comb-shaped polymer.

According to the present invention the silicon-containing comb-shaped polymer comprising a unit of the formula (I) can be produced by polymerizing a vinyl monomer of the formula

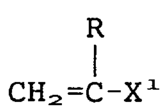 (III)

wherein R and $X^1$ are as defined above, by using a mercaptosilane compound of the formula:

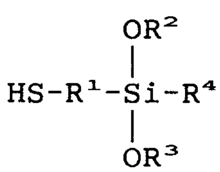 (IV)

wherein $R^1$, $R^2$, $R^3$ and $R^4$ are as defined above, as a chain transfer agent optionally in the presence of a radical initiator to obtain an intermediate macromonomer of the formula (II) which has a dialkoxysilyl group at the terminus, and polycondensing the intermediate macromonomer (II) alone or together with a dialkoxysilane compound of the formula:

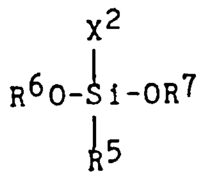

(V)

wherein $R^5$ and $X^2$ are as defined above, and $R^6$ and $R^7$ are the same or different and are each an alkyl having 1 to 4 carbon atoms, optionally in the presence of a polycondensation catalyst.

The mercaptosilane compound (IV) used as the chain transfer agent in the invention includes, for example, mercaptomethyl-methyldimethoxysilane, mercaptomethyl-methyldiethoxysilane, mercaptomethyl-ethyldimethoxysilane, mercaptomethyl-ethyldiethoxysilane, 2-mercaptoethyl-methyldimethoxysilane, 2-mercaptoethyl-methyldiethoxysilane, 2-mercaptoethyl-ethyldimethoxysilane, 2-mercaptoethyl-ethyldiethoxysilane, 3-mercaptopropyl-methyldimethoxysilane, 3-mercaptopropyl-methyldiethoxysilane, 3-mercaptopropyl-ethyldimethoxysilane, 3-mercaptopropyl-ethyldiethoxysilane, 4-mercaptobutyl-methyldimethoxysilane, 4-mercaptobutyl-methyldiethoxysilane, 4-mercaptobutyl-ethyldimethoxysilane and 4-mercaptobutyl-ethyldiethoxysilane. These may be used alone or in combination of two or more thereof. The mercaptosilane compound (IV) is used in an appropriate amount depending on the molecular weight of the final comb-shaped polymer, but is usually used in an amount of 0.01 to 5 parts by weight to 100 parts by weight of the vinyl monomer.

The vinyl monomer used in the invention includes all conventional monomers having vinyl, vinylene and/or vinylidene groups, for example, $C_{1-12}$ alkyl acrylates (e.g. methyl acrylate, ethyl acrylate, propyl acrylate, n-butyl acrylate, isobutyl acrylate, amyl acrylate, hexyl acrylate, 2-ethylhexyl acrylate, n-octyl acrylate, etc.), $C_{5-7}$ cycloalkyl acrylates (e.g. cyclohexyl acrylate, etc.), hydroxy-($C_{1-4}$) alkyl acrylates (e.g. glycidyl acrylate, 2-hydroxyethyl acrylate, 2-hydroxypropyl acrylate, etc.), $C_{1-12}$ alkyl methacrylates (e.g. methyl methacrylate, ethyl methacrylate, n-butyl methacylate, isobutyl methacrylate, 2-ethylhexyl methacrylate, lauryl methacrylate, tridecyl methacrylate, etc.), phenyl-($C_{1-3}$) alkyl methacrylates (e.g. benzyl methacrylate, etc.), $C_{5-7}$ cycloalkyl methacrylates (e.g. cyclohexyl methacrylate, etc.), tetrahydrofurfuryl methacrylate, hydroxy-($C_{1-4}$) alkyl methacrylates (e.g. 2-hydrxoyethyl methacrylate, 2-hydroxypropyl methacrylate, glycidyl methacrylate, etc.), $C_{1-2}$ alkoxy-$C_{1-4}$ alkyl methacylates (e.g. 2-methoxyethyl methacrylate, 2-ethoxyethyl methacrylate, etc.), halogeno-$C_{1-10}$ alkyl acrylates or methacylates (e.g. 2,2,3,3-tetrafluoropropyl acrylate, octafluoropentyl acrylate, octafluoropentyl methacrylate, etc.), styrene, and the like. There may also be used other vinyl monomers, such as maleic anhydride, vinylacetic acid, 4-methacryloxyethyl-trimellitic anhydride (4-META), acid phosphoxyethyl methacrylate, methacrylic acid, acrylic acid, vinyl propionate, vinyl versatate (Veoba, manufactured by Shell Oil), vinyl chloride, acrylonitrile, acrylamide, N-methylolacrylamide, vinylpyridine, vinylpyrrolidone and butadiene. These other vinyl monomers may be used alone or in combination thereof instead of or together with the vinyl monomers of the formula (III).

The dialkoxysilane compound (V) which is optionally used in this invention is used for improving the properties (e.g. adhesion) of the final comb-shaped polymer by introducing a functional group into the main chain thereof. The dialkoxysilane compound includes, for example, N-(2-aminoethyl)-3-aminopropyl-methyldimethoxysilane, 3-aminopropyl-methyldiethoxysilane, chloromethyl-methyldimethoxysilane, 3-chloropropyl-methyldimethoxysilane, 2-cyanoethyl-methyldiethoxysilane, diethyl-diethoxysilane, dimethyl-diethoxysilane, diphenyl-diethoxysilane, diphenyl-dimethoxysilane, 3-mercaptopropyl-methyldimethoxysilane, methyldiethoxysilane, methyldimethoxychlorosilane, methyldimethoxysilane, methyldodecyldiethoxysilanet methyloctadecyldiethoxysilane, methylphenyldiethoxysilane, methylphenyldimethoxysilane, (3,3,3-trifluoropropyl)methyldiethoxysilane, vinylmethyldiacetoxysilane and vinylmethyldiethoxysilane. Moreover, 1,1,4,4-tetramethyl-1,4-diethoxysilylethylene and 1,1,3,3-tetramethyl-1,3-diethoxydisiloxane are also usable. These compounds may be used alone or in combination thereof. The dialkoxysilane compound (V) is usually used in an amount of 0.01 to 5 parts by weight to 100 parts by weight of the macromonomer (II). In order to improve the water-repellency of the product, dialkyldialkoxysilanes are preferably used, and in order to improve the adhesion of the product, dialkoxysilanes containing a group suitable for giving adhesion (e.g. $-NH_2$, -SH, etc.) are preferably used.

Thus, the comb-shaped polymer comprising the unit of the formula (I) produced according to the present invention includes both of the product produced by using the dialkoxysilane compound (V) and the product produced without using the dialkoxysilane compound. The process for the production thereof is explained in more detail below.

(i) The vinyl monomer (III) is admixed with a fixed amount of the mercaptosilane compound (IV), and the mixture is subjected to heat polymerisation or photopolymerization in the presence of, optionally, a radical initiator. The polymerization reaction may also be carried out by a solution polymerization using a suitable solvent or without using any solvent, but it is not preferable to do by emulsion polymerization or suspension polymerization where water is co-present, because the alkoxysilyl group in the mercaptosilane compound (IV) is hydrolyzed by water.

The radical initiator used in the above reaction is usually used in an amount of 0.005 to 0.1 part by weight to 100 parts by weight of the vinyl monomer (III). The radical initiator includes, for example, 2,2'-azobisisobutyronitrile (AIBN), 2,2'-azobisisovaleronitrile, 2,2'-azobis(2,4-dimethylvaleronitrile),benzoyl peroxide (BPO), t-butyric peroxide, methyl ethyl ketone peroxide, and the like. There may also be used a combination of a Redox catalyst (transition metal salt, amine, etc.) with a peroxide radical initiator which is usually used in Redox polymerization. In case of photopolymerization, the radical initiator is not necessarily required.

By the polymerization of the vinyl monomer (III) and the mercaptosilane compound (IV), there is produced the desired intermediate macromonomer (II) having a dialkoxysilyl group at the terminus. When BPO is used as the radical initiator, the hydrolyzate in the radical polymerization, i.e. benzoic acid funtions as a catalyst, and hence, the polycondensation reaction as mentioned below proceeds in the presence of water to give directly the desired comb-shaped polymer in one step.

(ii) Subsequently, the macromonomer (II) obtained in the above step (i) is subjected to polycondensation reaction alone or together with a dialkoxysilane compound (V) in the presence of a polycondensation catalyst. The polycondensation reaction is usually carried out at a temperature of from room temperature to 80 °C for 5 to 48 hours. The polycondensation catalyst includes, for example, titanates (e.g. tetrabutyl titanate, tetrapropyl titanate, etc.), organic tin compounds (e.g. dibutyl tin dilaurate, dibutyl tin maleate, tin octate, tin naphthenate, n-butyl tin oxide, etc.), lead octate, amine compounds (e.g. butylamine, octylamine, dibutylamine, monoethanolamine, diethanolamine, triethanolamine, diethylenetriamine, triethylenetetramine, oleylamine, octylamine, cyclohexylamine, benzylamine, diethylaminopropylamine, xylylenediamine, triethylenediamine, guanidine, diphenylguanidine, 2,4,6-tris(dimethylaminomethyl)-phenol, morpholine, N-methylmorpholine, 1,3-diazabicyclo[5.4.6]undecene-7 (DBU), and carboxylic acid salts of these amine compounds. These compounds may be used alone or in combination of two or more thereof. The catalyst is usually used in an amount of 0.01 to 1 part by weight to 100 parts by weight of the macromonomer (II).

In the above polycondensation reaction, the reaction system become viscous in case of solution polymerization, and then, the solvent is removed in a usual manner to give the desired comb-shaped polymer as a solid substance at room temperature or as a highly viscous oily substance. In case of using butyl acrylate as the vinyl monomer, the comb-shaped polymer is obtained as a highly viscous substance having a low glass transition temperature, but in other cases, the polymer is obtained as a glass-like white powdery solid substance.

The comb-shaped polymer can easily be produced by a comparatively simple two step reaction (even by single step under a certain condition as mentioned above). Besides, the polymer has excellent migration property and hence can give improvement of properties (e.g. stain resistance) of surface or interface of substances to which the polymer is applied even in a small amount. Moreover, the comb-shaped polymer having a functional group of a dialkoxysilane compound (V) in the main chain shows excellent properties such as water-repellency, adhesion, etc. Owing to the excellent properties, the comb-shaped polymer is useful as an agent for giving water-repellency to paints, an agent for giving adhesion (particularly suitable for applying to glass or glass made materials), a releasing agent, and further an agent for giving surface activity.

The invention is illustrated by the following Examples.

Example 1

(1) Methyl methacrylate (MMA) (50 g), 3-mercaptopropyl-methyldimethoxysilane (0.9 g), AIBN (0.08 g) and toluene (25 g) are charged into a glass-made polymerization vessel, and the vessel is cooled, deaerated, and then sealed. The vessel is shaken in water bath at 60 °C to proceed the polymerization reaction. After polymerizing for 8 hours, there is obtained a high viscous polymer solution in toluene. The yield of the polymer is 96 % (calculated by gravimetric analysis: 105 °C, 4 hours). It is confirmed that the polymer thus obtained is polymethyl methacrylate by the analysis with IR spectrometer (manufactured by Nippon Bunko K.K.). Besides, this polymer has a number average molecular weight of 9.8 x $10^3$, which is measured by gel permeation chromatography (GPC).

(2) To a solution of polymethyl methacrylate in toluene obtained in the above (1) (100 parts by weight) is added dibutyl tin laurate (0.5 part by weight), and the mixture is spreaded on a dish in a layer as thin as possible and allowed to stand at room temperature for 7 days, by which the solvent toluene is evaporated to give a film of solid polymer. A part of the film is dissolved in tetrahydrofuran, and the molecular weight of the polymer is measured by GPC like in the above (1), by which it is confirmed that this polymer has a number average molecular weight of $4.5 \times 10^4$ and that it is a comb-shaped polymer of the following formula:

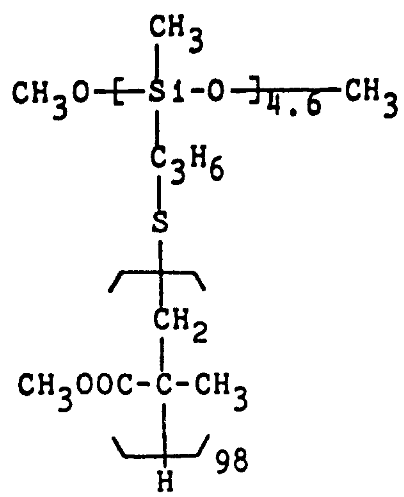

(3) To a solution of polymethyl methacrylate in toluene obtained in the above (1) (100 parts by weight) are added dimethyldiethoxysilane (2 parts by weight), deionized water (5 parts by weight) and n-butyl tin oxide (0.5 part by weight), and the mixture is sitrred at 60 °C for 8 hours, by which the mixture shows increased viscosity. The molecular weight thereof is measured by GPC likewise and it is confirmed that the product has a polymer having a number average molecular weight of $7.8 \times 10^4$, and thereby, that the product is a comb-shaped polymer comprising a unit consisting of an organopolysilaxane as the main chain and a polymethyl methacrylate having a number average molecular weight of $9.8 \times 10^3$ as the side chain.

Example 2

(1) Butyl acrylate (BA) (10 g) and 3-mercaptopropyl-methyldimethoxysilane (0.5 g) are charged into a glass-made polymerization vessel, and the vessel is cooled, de-aerated, and then sealed. The vessel is entered in water bath at 15 °C, and a UV light is irradiated at a distance of 10 cm with a UV irradiation device (SHL-100, manufactured by Toshiba, Japan) to proceed the photopolymerization reaction. After polymerizing for 10 hours, the resulting reaction mixture is taken out. The yield of the polymer is 95 % (calculated by gravimetric analysis). This polymer has a number average molecular weight of $4.5 \times 10^3$ which is measured by GPC.

(2) To the polymer (100 parts by weight) are added methyldimethoxysilane (5 parts by weight), n-butyl tin oxide (0.5 part by weight) and a small amount of deionized water. After dispersing well water, the mixture is allowed to stand at 80 °C for 1 day. The resulting polymer has a number average molecular weight of $3.8 \times 10^4$ when measured by GPC, and thereby it is confirmed that it is a comb-shaped polymer of the following formula:

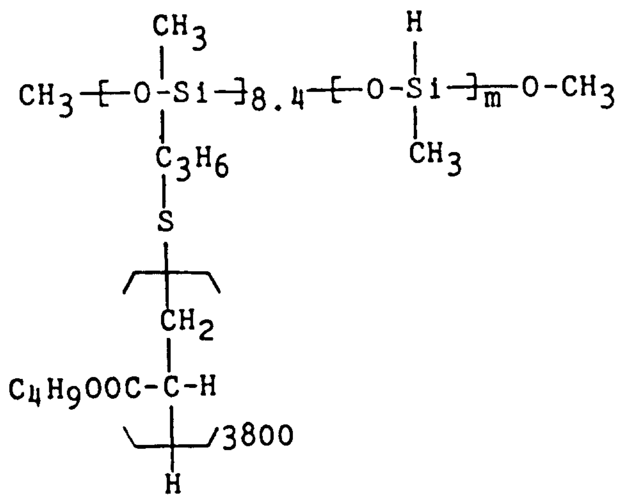

This comb-shaped polymer shows high adhesion to a surface of glass.

Example 3

MMA (8 g), octafluoropentyl methacrylate (2 g), 3-mercaptopropyl-methyldimethoxysilane (0.01 g), toluene (2 g) and AIBN (0.01 g) are subjected to polymerization reaction at 60 °C for 8 hours to give a copolymer resin. The resin is mixed with n-butyl tin oxide (0.05 g), and the mixture is applied onto a surface of glass plate and is allowed to stand at room temperature for 7 days. As the result, the product (comb-shaped polymer) shows excellent water-repellency and also oil-repellency.

Examples 4 to 27

In the same manner as described in Example 1 (1) (heat polymerization, at 60 °C), in Example 2 (1) (photopolymerization) and in Example 1 (2) (polycondensation) except that the ingredients as shown in Table 1 are used, there are produced various comb-shaped polymers. In all Examples, the used chain transfer agent is 3-mercaptopropyl-methyldimethoxysilane.

Table 1

| Ex. No. | Vinyl monomer (g) | Chain transfer agent (g) | AIBN (g) | Toluene (g) | Heat or photopolymerization |
|---|---|---|---|---|---|
| 4 | MMA (50) | 1.8 | 0.16 | 25 | Heat |
| 5 | BA (50) | 0.5 | - | - | Photo |
| 6 | BA (10), GA(1) | 0.5 | - | - | Photo |
| 7 | EA (10) | 0.5 | - | - | Photo |

- to be continued -

Table 1 (Continue)

| Ex. No. | Vinyl monomer (g) | Chain transfer agent (g) | AIBN (g) | Toluene (g) | Heat or photopolymerization |
|---|---|---|---|---|---|
| 8 | EA (10), GA(1) | 0.5 | - | - | Photo |
| 9 | St(10), MAn(0.5) | 0.3 | 0.01 | 2 | Heat |
| 10 | St(10), 4META(0.3) | 0.3 | 0.01 | 2 | Heat |
| 11 | MMA(10), MAn(0.5) | 0.3 | 0.01 | 2 | Heat |
| 12 | MMA(10), 4META(0.3) | 0.3 | 0.01 | 2 | Heat |
| 13 | EA(10), MAn(0.3) | 0.3 | 0.01 | 2 | Heat |
| 14 | EA(10), 4META(0.3) | 0.3 | 0.01 | 2 | Heat |
| 15 | MMA(9), Biscoat 4F(1) | 0.3 | 0.01 | 2 | Heat |
| 16 | MMA(8), Biscoat 4F(1) | 0.3 | 0.01 | 2 | Heat |
| 17 | MMA(9), Biscoat 8F (1) | 0.3 | 0.01 | 2 | Heat |
| 18 | MMA(8), Biscoat 8F(1) | 0.3 | 0.01 | 2 | Heat |
| 19 | MMA(8), Biscoat 8MF(2) | 0.3 | 0.01 | 2 | Heat |
| 20 | Biscoat 4F(5) | 0.1 | 0.005 | - | Heat |
| 21 | Biscoat 8F(5) | 0.1 | 0.005 | - | Heat |
| 22 | Biscoat 8MF(5) | 0.1 | 0.005 | - | Heat |
| 23 | VAc(10) | 0.1 | 0.01 | - | Heat |
| 24 | VAc(8), MMA(2) | 0.1 | 0.01 | - | Heat |

- to be continued -

Table 1 (Continue)

| Ex. No. | Vinyl monomer (g) | Chain transfer agent (g) | AIBN (g) | Toluene (g) | Heat or photopolymerization |
|---|---|---|---|---|---|
| 25 | VAc(5), MMA(5) | 0.1 | 0.01 | - | Heat |
| 26 | VAc(2), MMA(8) | 0.1 | 0.01 | - | Heat |
| 27 | GMA(10) | 0.13 | 0.01 | - | Heat |

[Note]: The abbreviations of the vinyl monomers in Table 1 mean the following compounds.

MMA: Methyl methacrylate

BA: Butyl acrylate

EA: Ethyl acrylate

GA: Glycidyl acrylate

St: Styrene

MAn: Maleic anhydride

4META: 4-Methacryloxyethyl-trimellitic anhydride

Biscoat 4F: 2,2,3,3-Tetrafluoropropyl acrylate

Biscoat 8F: Octafluoropentyl acrylate

Biscoat 8MF: Octafluoropentyl methacrylate

VAc: Vinyl acetate

GMA: Glycidyl methacrylate

## Claims

1. A process for producing a silicon-containing comb-shaped polymer comprising a unit of an organopolysiloxane as the main chain and a vinyl polymer as the side chain of the following formula:

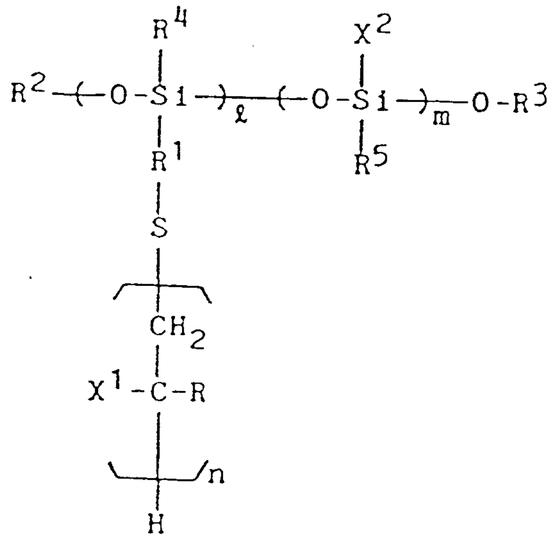

(I)

wherein $R^1$ is an alkylene having 1 to 4 carbon atoms, $R^2$, $R^3$ and $R^4$ are the same or different and are each an alkyl having 1 to 4 carbon atoms, R is hydrogen atom or methyl, $X^1$ is hydroxycarbonyl, an alkoxycarbonyl having 2 to 5 carbon atoms, a cycloalkyloxycarbonyl having 3 to 8 carbon atoms in the cycloalkyl moiety or phenyl, n is an integer of 1 to 100,000, $R^5$ is an alkyl having 1 to 4 carbon atoms or phenyl, $X^2$ is hydrogen atom, an alkyl having 1 to 4 carbon atoms, phenyl, chlorine, an alkoxysilyl having 1 to 4 carbon atoms in the alkoxy moiety, or an alkyl having 1 to 4 carbon atoms and containing a group selected from $-NH_2$, -NH-, -SH and -CN, $\ell$ has a minimum average value of 4.6 and a maximum value of 20, and m is 0 or an integer of 1 to 10,
which comprises polymerizing a vinyl monomer of the formula:

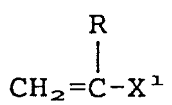

(III)

wherein R and $X^1$ are as defined above,
by using a mercaptosilane compound of the formula:

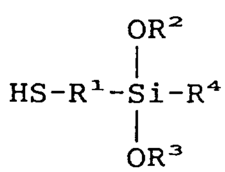

(IV)

wherein $R^1$, $R^2$, $R^3$ and $R^4$ are as defined above,
as a chain transfer agent to obtain a macromonomer of the following formula (II) which has a dialkoxysilyl group at the terminus:

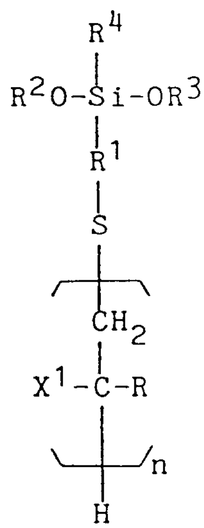

(II)

wherein R, $R^1$, $R^2$, $R^3$, $R^4$, $X^1$ and n are as defined above, and polycondensing the macromonomer (II).

**2.** The process according to claim 1, wherein the polymerization of the vinyl monomer (III) is carried out in the presence of a radical initiator.

**3.** The process according to claim 1, wherein the polycondensation of the macromonomer (II) is carried out together with a dialkoxysilane compound of the formula:

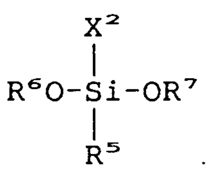

(V)

wherein $R^5$ and $X^2$ are as defined in claim 1, and $R^6$ and $R^7$ are the same or different and are each an alkyl having 1 to 4 carbon atoms.

**4.** The process according to claim 1, wherein the polycondensation of the macromonomer (II) is carried out in the presence of a polycondensation catalyst.

**5.** A macromonomer of the following formula:

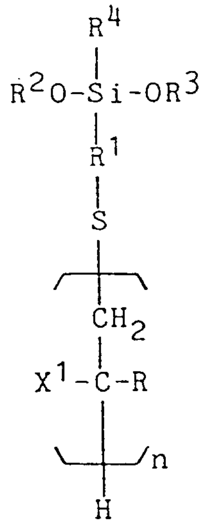

(II)

wherein R, $R^1$, $R^2$, $R^3$, $R^4$, $X^1$ and n are as defined in claim 1.

**Patentansprüche**

**1.** Verfahren zur Herstellung eines siliciumenthaltenden Polymeren mit Kamm-Struktur, das eine Einheit eines Polyorganosiloxans als Hauptkette und ein Vinylpolymeres als Seitenkette umfaßt, der folgenden Formel:

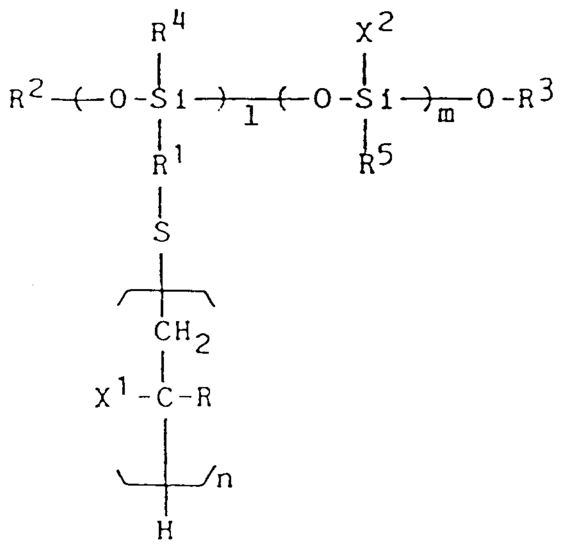

(I)

worin $R^1$ ein Alkylenrest mit 1 bis 4 Kohlenstoffatomen ist, $R^2$, $R^3$ und $R^4$ gleich oder verschieden sind und jeweils für einen Alkylrest mit 1 bis 4 Kohlenstoffatomen stehen, R ein Wasserstoffatom oder eine Methylgruppe ist, $X^1$ ein Hydroxycarbonylrest, ein Alkoxycarbonylrest mit 2 bis 5 Kohlenstoffatomen, ein Cycloalkyloxycarbonylrest mit 3 bis 8 Kohlenstoffatomen in der Cycloalkylgruppierung oder ein Phenylrest ist, n eine ganze Zahl von 1 bis 100000 ist, $R^5$ ein Alkylrest mit 1 bis 4 Kohlenstoffatomen oder ein Phenylrest ist, $X^2$ ein Wasserstoffatom, ein Alkylrest mit 1 bis 4 Kohlenstoffatomen, ein Phenylrest, ein Chloratom, ein Alkoxysilylrest mit 1 bis 4 Kohlenstoffatomen in der Alkoxygruppierung, oder ein Alkylrest, der 1 bis 4 Kohlenstoffatome besitzt und eine Gruppe ausgewählt aus $-NH_2$, -NH-, -SH und -CN enthält, ist, l einen minimalen Durchschnittswert von 4,6 und einen maximalen Wert von 20 besitzt, und m 0 oder eine ganze Zahl von 1 bis 10 ist, dadurch **gekennzeichnet**, daß man ein

Vinylmonomeres der folgenden Formel

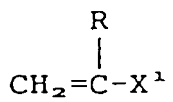

(III)

worin R und $X^1$ wie oben definiert sind, polymerisiert, indem man eine Mercaptosilan-Verbindung der Formel:

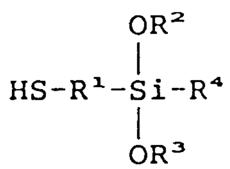

(IV)

worin $R^1$, $R^2$, $R^3$ und $R^4$ wie oben definiert sind, als ein Kettenübertragungsmittel verwendet, um ein Macromonomeres der folgenden Formel (II) zu erhalten, das endständig eine Dialkoxysilylgruppe aufweist:

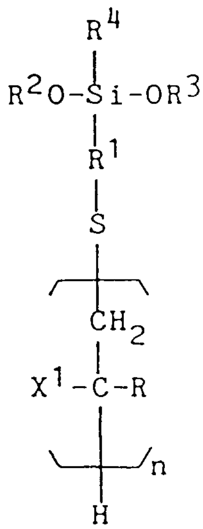

(II)

worin R, $R^1$, $R^2$, $R^3$, $R^4$, $X^1$ und n wie oben definiert sind, und daß man das Macromonomere (II) polykondensiert.

**2.** Verfahren nach Anspruch 1, dadurch **gekennzeichnet**, daß man die Polymerisation des Vinylmonomeren (III) in Gegenwart eines Radikalinitiators durchführt.

**3.** Verfahren nach Anspruch 1, dadurch **gekennzeichnet**, daß man die Polykondensation des Macromonomeren (II) zusammen mit einer Dialkoxysilan-Verbindung der Formel:

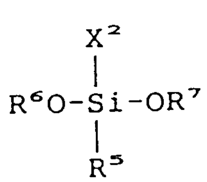

(V)

worin $R^5$ und $X^2$ wie in Anspruch 1 definiert sind, und $R^6$ und $R^7$ gleich oder verschieden sind und

jeweils für ein Alkylrest mit 1 bis 4 Kohlenstoffatomen stehen, durchführt.

**4.** Verfahren nach Anspruch 1, dadurch **gekennzeichnet**, daß man die Polykondensation des Macromonomeren (II) in Gegenwart eines Polykondensationskatalysators durchführt.

**5.** Macromonomeres der folgenden Formel:

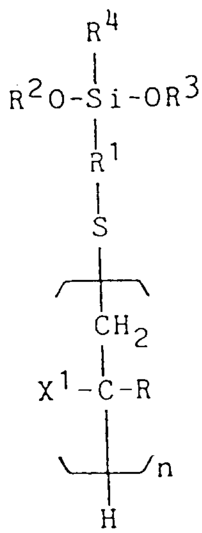

(II)

worin R, $R^1$, $R^2$, $R^3$, $R^4$, $X^1$ und n wie in Anspruch 1 definiert sind.

## Revendications

**1.** Procédé pour produire un polymère à structure en peigne contenant du silicium comprenant comme chaîne principale un motif d'un organopolysiloxanne et comme chaîne latérale un polymère vinylique, de formule suivante :

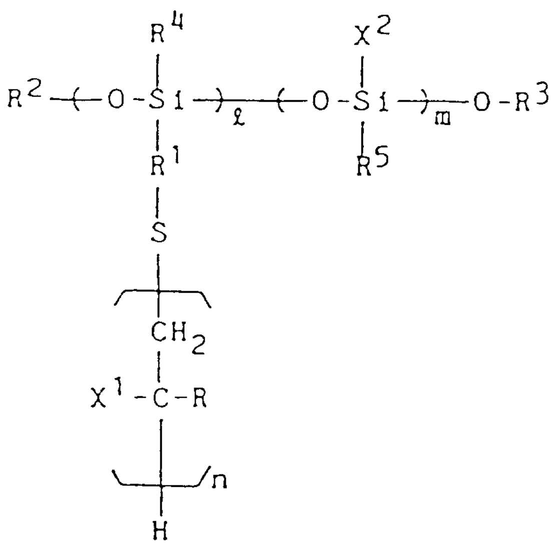

(I)

dans laquelle $R^1$ est un groupe alkylène en $C_1$-$C_4$,
$R^2$, $R^3$ et $R^4$ sont identiques ou différents et représentent chacun un groupe alkyle en $C_1$-$C_4$,
R est un atome d'hydrogène ou un groupe méthyle,
$X^1$ est un groupe hydroxycarbonyle, un groupe alcoxycarbonyle en $C_2$-$C_5$, un groupe cycloalcoxycarbonyle dont le reste cycloalkyle est en $C_3$-$C_8$ ou un groupe phényle,
n est un entier de 1 à 100 000,

$R^5$ est un groupe alkyle en $C_1$-$C_4$ ou un groupe phényle, $X^2$ est un atome d'hydrogène ou d'halogène, un groupe alkyle en $C_1$-$C_4$, un groupe phényle, un groupe alcoxysilyle dont le reste alcoxy est en $C_1$-$C_4$ ou un groupe alkyle en $C_1$-$C_4$ et contenant un groupe choisi parmi -$NH_2$-, -NH-, SH et -CN, l a une valeur moyenne minimale de 4,6 et une valeur maximale de 20 et m est égal 0 ou un entier de 1 à 10, qui comprend la polymérisation d'un monomère vinylique de formule :

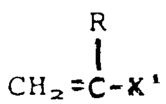

(III)

dans laquelle R et $X^1$ sont définis comme ci-dessus, en utilisant comme agent de transfert de chaînes un mercaptosilane de formule :

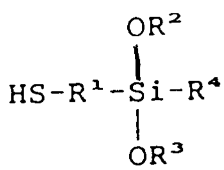

(IV)

dans laquelle $R^1$, $R^2$, $R^3$ et $R^4$ sont définis comme ci-dessus, pour obtenir un macromonomère de formule (II) suivante ayant un groupe dialcoxysilyle terminal :

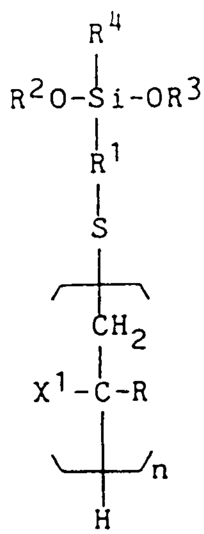

(II)

dans laquelle R, $R^1$, $R^2$, $R^3$, $R^4$, $X^1$ et n sont définis comme ci-dessus et la polycondensation du macromonomère (II).

**2.** Procédé selon la revendication 1, dans lequel la polymérisation du monomère vinylique (III) est effectuée en présence d'un inducteur radicalaire.

**3.** Procédé selon la revendication 1, dans lequel la polycondensation du macromonomère (II) est effectuée en combinaison avec un dialcoxysilane de formule :

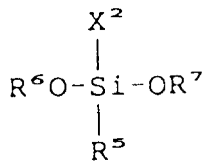

(V)

dans laquelle $R^5$ et $X^2$ sont définis à la revendication 1 et $R^6$ et $R^7$ sont identiques ou différents et représentent chacun un groupe alkyle en $C_1$-$C_4$.

4. Procédé selon la revendication 1, dans lequel la polycondensation du macromonomère (II) est effectuée en présence d'un catalyseur de polycondensation.

5. Macromonomère de formule suivante :

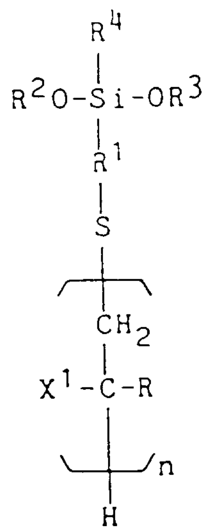

(II)

dans laquelle R, $R^1$, $R^2$, $R^3$, $R^4$, $X^1$ et n sont définis à la revendication 1.